# FASCICULE DE BREVET EUROPEEN

(11) **EP 1 523 547 B1**
(45) Date de publication et mention de la délivrance du brevet: **02.02.2011**
(21) Numéro de dépôt: 03738174.6
(22) Date de dépôt: 18.03.2003
(51) Int. Cl.: C12G 3/06

(54) **PROCEDE DE FABRICATION ET DISPOSITIF LE METTANT EN OEUVRE DE BOISSONS SPIRITUEUSES AROMATISEES A BASE DE GRAINES DE FRUITS**
VERFAHREN ZUR HERSTELLEN VON WÜRZIGEN SPIRITUOSEN
METHOD FOR MAKING FLAVORED SPIRITS BASED ON FRUIT SEEDS AND DEVICE THEREFOR

(30) Priorité: 11.04.2002 CI 20020114
(43) Date de publication de la demande: 20.04.2005
(73) Titulaire: COMBIER, 49400 SAUMUR (FR)
(72) Inventeur: COMBIER, 49400 SAUMUR (FR)
(74) Mandataire: Honoré, Anne-Claire
(86) Numéro de dépôt international: PCT/FR2003/000853
(87) Numéro de publication internationale: WO 2003/085078

(56) Documents cités:
- DATABASE WPI Section Ch, Week 198540 Derwent Publications Ltd., London, GB; Class D16, AN 1985-247321 XP002253097 & JP 60 164474 A (SHINOZAKI G K SHOTE) 27 août 1985 (1985-08-27) cité dans la demande
- PATENT ABSTRACTS OF JAPAN vol. 016, no. 238 (C-0946), 2 juin 1992 (1992-06-02) & JP 04 051885 A (TADAO NAKAJIMA), 20 février 1992 (1992-02-20)
- PATENT ABSTRACTS OF JAPAN vol. 009, no. 254 (C-308), 11 octobre 1985 (1985-10-11) & JP 60 110278 A (SHIRAHANA SHIYUZOU KK), 15 juin 1985 (1985-06-15)
- BELITZ-GROSCH: "Chapter 20.3. Spirits" 1999, FOOD CHEMISTRY, BELITZ-GROSCH, 2ND ED., PG. 864-873 , SPRINGER-VERLAG BERLIN HEIDELBERG NEW YORK , XP002253096 ISBN: 3-540-64704-X page 868 - page 872
- LE CONSEIL DES COMMUNAUTÉS EUROPÉENES: "Règlement (CEE) N° 1576/89" INTERNET ARTICLE, [Online] 29 mai 1989 (1989-05-29), XP002253095 Extrait de l'Internet: <URL:http://europa.eu.int> [extrait le 2003-08-28] cité dans la demande
- DATABASE WPI Section Ch, Week 199102 Derwent Publications Ltd., London, GB; Class D16, AN 1991-012208 XP002253098 & JP 02 286070 A (SAITO Y) 26 novembre 1990 (1990-11-26)
- DATABASE WPI Section Ch, Week 198638 Derwent Publications Ltd., London, GB; Class D16, AN 1986-249470 XP002253099 & PATENT ABSTRACTS OF JAPAN vol. 010, no. 390 (C-394), 26 décembre 1986 (1986-12-26) & JP 61 177977 A (TOSHIO SUZUKI), 9 août 1986 (1986-08-09)
- PATENT ABSTRACTS OF JAPAN vol. 011, no. 222 (C-435), 18 juillet 1987 (1987-07-18) & JP 62 036179 A (TOSHIJI INUDOU), 17 février 1987 (1987-02-17) cité dans la demande

## Description

La présente invention a pour objet un procédé de fabrication de boissons spiritueuses à base de graines de fruits, notamment d'eau-de-vie de cacao ou de café, ainsi qu'un alambic permettant la mise en oeuvre dudit procédé.

Les termes « boisson spiritueuse », « eau-de-vie » ainsi que les autres désignations de boissons alcoolisées figurant dans ce brevet s'entendent selon les définitions données dans le Règlement CEE N° 1576/89 du Conseil du 29 mai 1989. on notera plus particulièrement que la dénomination « eau de vie de » suivie du nom du fruit peut être accordée aux boissons spiritueuses obtenues par macération, dans certaines proportions, de certaines baies (framboises, mûres, myrtilles), partiellement fermentées ou non, dans l'alcool, suivie d'une distillation. Le terme alcool désignera l'alcool éthylique, de préférence d'origine agricole, et/ou un distillat d'origine agricole et/ou une eau-de-vie tels que définis dans le Règlement Communautaire précité.

Depuis bien longtemps, l'humanité connaît une grande diversité de boissons spiritueuses à base de baies, céréales, fruits ou légumineuses fabriquées généralement soit par une distillation suivant une fermentation alcoolique soit par macération dans de l'alcool ou encore par mélange de boissons spiritueuses préexistantes .

Toutefois, les boissons spiritueuses à base de graines de fruits sont quasi inexistantes, sûrement en raison de ce que, mis à part le café ou le cacao, elles présentent sur le plan organoleptique un intérêt limité ou inconnu. De plus, en raison de leur composition et notamment leur composition après torréfaction, les graines de fruits sont difficilement fermentables, ce qui oblige les liquoristes à s'écarter de la voie habituellement suivie pour les fruits.

On sait cependant qu'il existe un certain nombre de boissons spiritueuses aromatisées au cacao, au chocolat ou encore au café. Ainsi, pour le cacao on connaît différentes liqueurs et notamment la crème de cacao incolore ou marron. On peut aussi donner en exemple la liqueur au chocolat décrite dans le brevet DE 19 524 714, consistant en un mélange de xanthane, d'eau, de poudre de cacao, de sucre, d'alcool et d'aromates donnant une liqueur homogène titrant 30 à 40 % vol. d'alcool. Par ailleurs, les boissons spiritueuses incorporant du café soluble ou en grain, en poudre, etc. sont plus communes. On relèvera ainsi, par exemple, la célèbre liqueur mexicaine Kahlua^{®} ou les nombreuses préparations de Shochu aromatisé au café qui ont fait l'objet de plusieurs demandes de brevet japonaises telles que notamment JP 60164474 et JP 62036179.

Néanmoins, toutes ces boissons spiritueuses existantes sont, en raison de leur mode de fabrication, assez peu satisfaisantes sur le plan organoleptique et notamment au niveau de l'intensité et de la spécificité à la fois des arômes, du goût et de l'odeur de cacao ou de café qu'elles exhalent ou recèlent. En outre, pour les professionnels de l'alimentaire et notamment pour les chocolatiers et confiseurs, ces boissons présentent pour les mêmes raisons un faible intérêt en tant que matière primaire entrant dans des préparations.

L'un des buts de l'invention est donc de pallier ces inconvénients en proposant un procédé de fabrication d'une boisson spiritueuse à -base de graines de fruits remarquable en ce que ledit procédé comprend au moins une première étape de torréfaction des graines suivie d'une étape de mise en condition de ces mêmes graines, consistant à mélanger les produits issus du concassage des graines avec au moins un liquide, puis à chauffer à l'étouffée le précédent mélange.

On comprend bien que cette étape préalable de mise en condition destinée à humidifier, ramollir et gonfler les morceaux de graines torréfiées permet d'optimiser les conditions d'extraction des composants organoleptiques contenus dans les graines torréfiées pendant les étapes de macération et/ou de distillation qui suivront dans le procédé.

Selon une autre caractéristique de l'invention, le procédé comprend une étape optionnelle d'addition d'un concentré naturel des graines de fruits, cette addition étant effectuée soit au début de l'étape de mise en condition des graines soit lors d'une étape ultérieure de mélange avec un liquide alcoolisé.

On voit bien qu'ainsi l'intensité, à la fois des arômes, du goût et de l'odeur de la graine torréfiée est renforcée.

Selon une autre caractéristique de l'invention, on mettra en oeuvre le procédé dans un alambic charentais particulier, comportant sur le dessus de la chaudière une première porte équipée d'un verrouillage et sur le côté de la chaudière une deuxième porte équipée d'un verrouillage.

D'autres avantages et caractéristiques ressortiront mieux de la description qui va suivre, de variantes d'exécution données à titre d'exemple non limitatif, du procédé conforme â l'invention, appliqué à la fabrication d'eau-de-vie de café ou de cacao.

### EXEMPLE 1 : Fabrication d'une eau-de-vie de cacao.

### Etape 1 : Mise en condition des graines

On mélange ensemble dans un récipient les produits qui suivent dans les proportions indiquée
- 70% en poids de produits issus du concassage des graines torréfiées du cacao se répartissant de la manière suivante: 80% de poudre et 20% de morceaux. Préférentiellement, on utilisera 50% de poudre et 50% de morceaux.
- 10% d'alcool,
- 15% d'eau,
- 5% de sucre.

Les proportions de sucre et d'eau sont ajustables en fonction du goût sucré recherché, la partie de sucre n'excédant de préférence pas 10% de l'ensemble.

On procède ensuite au chauffage à basse température (cuisson sous la température d'ébullition, de 40 à 90°C) et à l'étouffée, c'est-à-dire en vase clos, du précédent mélange, jusqu'à obtenir une perte de 20 à 25% du volume initial. Après refroidissement, le mélange est transféré dans un récipient de grande contenance, dans lequel seront effectuées les étapes 2 à 4 suivantes du procédé, dont le mélange avec une solution alcoolique aqueuse et la macération. Pour plus de commodité, on introduit le mélange directement dans l'alambic dans lequel sera menée l'étape 5 de distillation et dans lequel on procède également aux étapes 2 à 4.

La quantité de graines conditionnées introduite représente 5 à 40% du volume utile de l'alambic, on choisira de préférence 20%. La proportion est modulable en fonction du goût et de l'intensité des arômes recherchés dans le produit final et dépend également de la capacité de l'alambic (surface d'échange lors de la macération, cf. étape 4 infra).

### Etape 2 : Application d'un concentré actif.

Cette étape est optionnelle. On ajoute à la masse de graines conditionnées un concentré naturel de cacao, issu de la même torréfaction que les graines de cacao précédemment conditionnées. Une variante d'exécution consiste à l'ajouter dans le mélange des produits de l'étape 1 de mise en condition. Le concentré actif représente 2% du mélange final de l'alambic. Le concentré est réalisé à partir de graines torrefiées réduites à chaud puis traitées selon les techniques connues par un séparateur de molécules alimentaires tel que classiquement utilisé dans l'industrie des arômes alimentaires.

Le choix avantageux d'un concentré issu de la même torréfaction dont sont issus les grains de la pâte permet d'obtenir un produit aux qualités organoleptiques très spécifiques, variant selon les torréfactions. Bien entendu, on peut également employer un assemblage de concentrés afin d'obtenir une production d'eau-de-vie plus homogène sur le plan organoleptique.

### Etape 3 : Mélange avec une solution alcoolique aqueuse.

L'alambic est rempli de préférence avec un mélange à 50 % d'eau et d'alcool éthylique d'origine agricole. Le mélange d'eau et d'alcool est réalisé préalablement en raison des risques d'explosion.

Bien évidemment, toute autre solution alcoolique aqueuse, résultant par exemple d'un mélange de plusieurs boissons avec une eau-de-vie que l'on souhaiterait aromatiser, peut être utilisée.

### Etape 4 : Macération.

On laisse macérer le mélange précédent dans la cuve de l'alambic pendant 5 à 8 heures. Cette durée correspond à l'optimum de diffusion des composés organoleptiques des graines conditionnées dans le liquide alcoolisé d'extraction. Il va de soi que cette étape de macération peut être prolongée ou raccourcie, voire supprimée, avec pour conséquence dans ces deux dernière que l'intensité des arômes et saveurs en sera bien entendu d'autant diminuée.

### Etape 5 : Distillation.

On procède ensuite à la distillation du macérât de manière conventionnelle pendant six à huit heures : séparation de la tête, du coeur et de la queue de manière traditionnelle. On procède à une seule passe de distillation. On récupère le coeur du distillat qui aura un taux d'environ 73° alcooliques. La distillation ainsi effectuée revient à réaliser une sublimation qui potentialise les qualités organoleptiques du cacao torréfié. Le distillat ainsi obtenu est incolore. Bien entendu, on pourra procéder à une deuxième passe selon la nature de la solution alcoolique aqueuse mélangée à la masse de graines de fruits conditionnées.

### Etape 6 : Coupage du produit élaboré à l'étape 5.

Le coeur de distillat recueilli est coupé à froid avec de l'eau de distillat, à 42° alcoolique.

### Etape 7 : Eventage du produit coupé.

La boisson élaborée et coupée est stockée dans des cuves ouvertes où elle est soumise à une agitation régulière. Cette étape permet, par évaporation naturelle, de rectifier la qualité olfactive du produit en effaçant les émanations d'éthanol. On considère généralement qu'il faut une durée de 10 jours après élaboration du produit pour évacuer toutes les émanations gênantes.

Bien sûr, toute autre technique d'aération connue de l'Homme de l'Art, comme par exemple une ventilation mécanisée ou un bullage, peut être appliquée.

### Etape 8 : Rectification du taux d'alcool.

On rectifie le taux d'alcool de la boisson éventée à la valeur recherchée pour la commercialisation, ici 40% volume d'alcool. La rectification peut être effectuée avec un apport de sucre afin d'en affiner le goût.

### Etape 9 : Stockage.

La boisson élaborée précédemment est stockée dans un milieu hermétiquement fermé-, par exemple en cuves fermées, pendant une période minimale de 10 à 15- jours.

### Etape 10 : Filtration.

La boisson élaborée précédemment est enfin filtrée avant embouteillage.

### EXEMPLE 2 : Fabrication d'une eau-de-vie de café.

Les étapes et principes décrits dans le premier exemple sont réapplicables à l'élaboration d'une eau-de-vie de café. Toutefois, on notera que pour l'étape 1 de mise en condition, on utilisera 80% de poudre et 20% de morceaux, préférentiellement 100% de morceaux de graines de café.

Par ailleurs, ce procédé peut bien entendu comporter en variante optionnelle une étape de décaféination de la boisson, décaféination partielle ou totale. Cette étape permet d'avoir une boisson avec un taux de caféine conforme aux normes en vigueur dans les pays où cette boisson est destinée à être commercialisée. La technique employée est celle classiquement connue de l'Homme de l'Art.

L'étape de décaféination sera avantageusement insérée après l'étape 7 d'éventage et avant l'étape 8 de rectification du taux d'alcool de la boisson.

On comprend bien à la lecture de ces deux exemples que le procédé objet de l'invention permet d'obtenir une boisson spiritueuse, de l'eau-de-vie dans les exemples précédents, aux qualités organoleptiques exceptionnelles et fortement susceptibles d'intéresser les professionnels de l'alimentaire. De plus, l'utilisation préférentielle d'alcool éthylique d'origine agricole contribue à cette excellente qualité organoleptique et garantit une qualité conforme aux normes internationales concernant les teneurs en éléments résiduels des boissons alcoolisées (méthanol, furfural, méthyl-2-propanol-1).

On notera en outre que l'application du procédé aux graines de café et de cacao permet d'obtenir un produit original à valeur ajoutée, offrant de nouveaux débouchés aux producteurs de ces matières premières. Bien entendu, l'eau-de-vie obtenue selon le procédé décrit dans les exemples peut servir de base à la fabrication d'autres boissons spiritueuses et notamment des crèmes et liqueurs

De plus, il est bien évident que l'on peut obtenir une boisson alcoolisée à base de graines de fruits selon le procédé conforme à l'invention en réalisant uniquement les quatre première étapes, jusqu'à la macération. De même, l'étape de macération et les étapes supplémentaires de distillation, coupage, éventage, rectification, stockage et filtrage peuvent s'agencer dans un ordre différent de celui présenté dans les exemples ci-dessus, ou même ne pas être toutes mises en oeuvre, en fonction des caractéristiques finales (couleur, teneur en alcool, degré d'aromatisation, etc.) de la boisson que l'on cherche à élaborer, sans pour autant sortir du cadre de l'invention. Ainsi, en réalisant les étapes 1 à 4 (pendant 6 heures) avec des graines de café, suivies de l'étape 10 puis des étapes 6 (à 35° alcoolique avec du sucre) et 7 (durant 5 jours), on obtiendra une boisson spiritueuse proche d'une liqueur à environ 34° alcoolique à la couleur et l'arôme du café. Ou encore, en exécutant les étapes 1,3,5,6,7 et 10 on pourra obtenir une eau-de-vie incolore fortement alcoolisée (à 65° alcoolique par exemple) légèrement aromatisée au cacao.

Un autre objet de l'invention est un dispositif mettant en oeuvre le procédé selon l'invention telle qu'exposée précédemment. Ce dispositif comporte un alambic dans lequel sont menées les étapes 2 à 5 du procédé. Cet alambic, préférentiellement de type « charentais » - avec un chapiteau et un col de cygne surmontant la chaudière - a été modifié afin de permettre la mise en oeuvre du procédé selon l'invention. A cette fin, l'alambic est doté sur le dessus de la chaudière d'une première porte. équipée d'un verrouillage, pour l'incorporation de la masse de graines mises en condition et de la solution alcoolique aqueuse. Il comporte également sur le côté de la chaudière une deuxième porte munie d'un verrouillage pour l'extraction du résiduel après distillation. Ces portes sont globalement rectangulaires et ont, par exemple, pour un alambic dont la chaudière a un volume- total de 15 hl, des dimensions de 40 x 50 cm (hauteur x largeur). Les modifications nécessaires ainsi apportées ne doivent en rien modifier le fonctionnement normal de l'alambic. Bien entendu, tout autre type d'alambic connu de l'Homme de l'Art et doté des ouvertures appropriées pourrait convenir à la mise en oeuvre du procédé selon l'invention. En outre, il est possible d'utiliser un alambic traditionnel non modifié à la condition d'effectuer la macération dans un autre récipient et de filtrer le macérât afin de n'introduire que la phase liquide dans l'alambic, sous peine de détériorer ce dernier par l'accumulation des résidus solides au fur et à mesure des distillations.

Enfin, il va de soi que le procédé de fabrication de boisson spiritueuse selon l'invention peut être appliqué à toute graine de fruit dont les caractéristiques organoleptiques s'avéreraient intéressantes et que les exemples que l'on vient de donner ne sont que des illustrations particulières en aucun cas limitatives des domaines d'application de l'invention.

## Revendications

1. Procédé de fabrication d'une boisson spiritueuse aromatisée à base de graines de fruits torréfiées **caractérisé en ce que** ledit procédé comporte une étape préalable de mise en condition desdites graines, consistant à mélanger les produits issus du concassage des graines avec au moins un liquide alcoolisé, puis à chauffer le précédent mélange à l'étouffée c'est-à-dire en vase clos, et à basse température, jusqu'à une perte de volume de 20 à 25 %.

2. Procédé selon la revendication 1 **caractérisé en ce que** l'étape préalable de mise en condition consiste à mélanger 70% en poids de produits issus du concassage des graines torréfiées avec 10% d'alcool, 10 à 20% d'eau et 0 à 10% de sucre, puis à réduire à l'étouffée le mélange obtenu jusqu'à une perte de volume de 20 à 25%.

3. Procédé selon l'une quelconque des revendications précédentes **caractérisé en ce qu'**il comprend une étape de mélange dans un récipient des graines préalablement conditionnées à au moins un liquide alcoolisé.

4. Procédé selon la revendication, précédente **caractérisé en ce qu'**il comprend en outre une étape de macération aprés l'étape de mélange.

5. Procédé selon les revendications 3 ou 4 **caractérisé en ce que** les graines préalablement conditionnées sont mélangées au liquide alcoolisé de telle sorte qu'elles représentent 5 à 40% du volume utile du récipient.

6. Procédé selon l'une quelconque des revendications précédentes **caractérisé en ce que** ledit procédé comprend en sus, une étape d'addition d'un concentré naturel de graines de fruits, l'addition se produisant au début de l'étape préalable de mise en condition ou lors de l'étape de mélange.

7. Procédé selon l'une quelconque des revendications 3 à 6 **caractérisé en ce qu'**il comprend une étape supplémentaire d'au moins une distillation.

8. Procédé selon la revendication 7 **caractérisé en ce que** la distillation est conduite en une seule passe.

9. Procédé selon l'une quelconque des revendications 4 à 8 **caractérisé en ce que** le macérât ou le coeur de distillat recueilli est ensuite coupé.

10. Procédé selon l'une quelconque des revendications 4 à 9 **caractérisé en ce qu'**il comprend une étape supplémentaire d'éventage de la boisson.

11. Procédé selon l'une quelconque des revendications 4 à 10 **caractérisé en ce que** qu'il comprend une étape supplémentaire de rectification du taux d'alcool de la boisson.

12. Procédé selon l'une quelconque des revendications 4 à 11 **caractérisé en ce qu'**il comprend une étape supplémentaire de stockage en milieu hermétiquement fermé de la boisson élaborée.

13. Procédé selon l'une quelconque des revendications 4 à 12 **caractérisé en ce qu'**il comprend une étape supplémentaire de filtration de la boisson élaborée.

14. Procédé selon l'une quelconque des revendications précédentes **caractérisé en ce que** les graines de fruits sont des graines de cacao ou de café.

15. Procédé selon la revendication 14 **caractérisé en ce que** les proportions de produits de concassage du café sont de 20 à 100% de morceaux et 0 à 80% de poudre.

16. Procédé selon la revendication 14 **caractérisé en ce que** les proportions de produits de concassage du cacao sont de 20 à 50% de morceaux et 50 à 80% de poudre.

17. Application du procédé conforme à l'une quelconque des revendications 14 à 16 pour la fabrication d'eau-de-vie de cacao ou de café.

## Claims

1. Method for producing flavoured spirits based on roasted fruit seeds **characterised in that** said method comprises a prior step for conditioning said seeds, consisting of mixing the products obtained from crushing the seeds with at least one alcoholic liquid, and steam-heating the above mixture, i.e. in a closed vessel, and at a low temperature, up to a 20 to 25% loss of volume.

2. Method according to claim 1 **characterised in that** the prior conditioning step consists of mixing 70% by weight of products obtained from crushing the roasted seeds with 10% alcohol, 10 to 20% water and 0 to 10% sugar, and steam-reducing the mixture obtained up to a 20 to 25% loss of volume.

3. Method according to any of the above claims **characterised in that** it comprises a step for mixing the previously conditioned seeds with at least one alcoholic liquid in a vessel.

4. Method according to the above claim **characterised in that** it further comprises a maceration step after the mixing step.

5. Method according to claims 3 or 4 **characterised in that** the previously conditioned seeds are mixed with the alcoholic liquid such that they represent 5 to 40% of the effective volume of the vessel.

6. Method according to any of the above claims **characterised in that** said method further comprises a step for adding a natural fruit seed concentrate, the addition being carried out at the start of the prior conditioning step or during the mixing step.

7. Method according to any of claims 3 to 6 **characterised in that** it comprises an additional step of at least one distillation.

8. Method according to claim 7 **characterised in that** the distillation is conducted in a single pass.

9. Method according to any of claims 4 to 8 **characterised in that** the macerate or the core of the distillate collected is then diluted.

10. Method according to any of claims 4 to 9 **characterised in that** it comprises an additional spirit venting step.

11. Method according to any of claims 4 to 10 **characterised in that** it comprises an additional step for rectifying the alcohol content in the spirit.

12. Method according to any of claims 4 to 11 **characterised in that** it comprises an additional step for storing the prepared spirit in a hermetically sealed environment.

13. Method according to any of claims 4 to 12 **characterised in that** it comprises an additional step for filtering the prepared spirit.

14. Method according to any of the above claims **characterised in that** the fruit seeds are cocoa or coffee beans.

15. Method according to claim 14 **characterised in that** the proportions of coffee crushing products are 20 to 100% pieces and 0 to 80% powder.

16. Method according to claim 14 **characterised in that** the proportions of cocoa crushing products are 20 to 50% pieces and 50 to 80% powder.

17. Application of the method according to any of claims 14 to 16 for the production of cocoa or coffee spirits.

## Patentansprüche

1. Verfahren zum Herstellen einer würzigen Spirituose basierend auf gerösteten Fruchtkernen, **dadurch gekennzeichnet, dass** das besagte Verfahren einen vorherigen Schritt zur Vorbereitung der besagten Kerne enthält, der darin besteht, die Produkte, die aus der Grobschrotung der Kerne hervorgehen, mit zumindest einer alkoholischen Flüssigkeit zu vermengen, und dann die vorige Mischung zugedeckt, also in einem geschlossenen Gefäß und bei niedriger Temperatur bis zu einem Volumenverlust von 20 bis 25% zu erhitzen.

2. Verfahren nach Anspruch 1, **dadurch gekennzeichnet, dass** der vorherige Schritt zur Vorbereitung darin besteht, 70 Gewichtsprozent der Produkte aus der Grobschrotung der gerösteten Kerne mit 10% Alkohol, 10 bis 20% Wasser und 0 bis 10% Zucker zu vermengen, und die erhaltene Mischung zugedeckt bis zu einem Volumenverlust von 20 bis 25% zu reduzieren.

3. Verfahren nach einem der vorherigen Ansprüche, **dadurch gekennzeichnet, dass** es einen Schritt zum Vermengen der zuvor vorbereiteten Kerne mit zumindest einer alkoholischen Flüssigkeit in einem Behälter enthält.

4. Verfahren nach dem vorherigen Anspruch, **dadurch gekennzeichnet, dass** es darüber hinaus nach dem Vermengungsschritt einen Mazerationsschritt enthält.

5. Verfahren nach den Ansprüchen 3 oder 4, **dadurch gekennzeichnet, dass** die zuvor vorbereiteten Kerne derart mit einer alkoholischen Flüssigkeit vermengt werden, dass sie 5 bis 40% des Nutzvolumens im Behälter einnehmen.

6. Verfahren nach einem der vorherigen Ansprüche, **dadurch gekennzeichnet, dass** das besagte Verfahren darüber hinaus einen Schritt zur Beigabe eines natürlichen Fruchtkernkonzentrats enthält, wobei die Beigabe zu Beginn des vorbereitenden Schrittes zur Vorbereitung oder beim Vermengungsschritt erfolgt.

7. Verfahren nach einem der Ansprüche 3 bis 6, **dadurch gekennzeichnet, dass** es einen zusätzlichen Schritt von zumindest einer Destillation enthält.

8. Verfahren nach Anspruch 7, **dadurch gekennzeichnet, dass** die Destillation in einem Durchgang erfolgt.

9. Verfahren nach einem der Ansprüche 4 bis 8, **dadurch gekennzeichnet, dass** das Mazerat oder das erhaltene Herzstück des Destillats anschließend getrennt wird.

10. Verfahren nach einem der Ansprüche 4 bis 9, **dadurch gekennzeichnet, dass** es einen zusätzlichen Schritt der Belüftung des Getränkes enthält.

11. Verfahren nach einem der Ansprüche 4 bis 10, **dadurch gekennzeichnet, dass** es einen zusätzlichen Schritt der Rektifizierung des Alkoholgehaltes des Getränkes enthält.

12. Verfahren nach einem der Ansprüche 4 bis 11, **dadurch gekennzeichnet, dass** es einen zusätzlichen Schritt der Lagerung des ausgearbeiteten Getränkes in einem hermetisch geschlossenen Milieu enthält.

13. Verfahren nach einem der Ansprüche 4 bis 12, **dadurch gekennzeichnet, dass** es einen zusätzlichen Schritt der Filterung des ausgearbeiteten Getränkes enthält.

14. Verfahren nach einem der vorherigen Ansprüche, **dadurch gekennzeichnet, dass** die Fruchtkerne Kakao- oder Kaffeebohnen sind.

15. Verfahren nach Anspruch 14, **dadurch gekennzeichnet, dass** das Verhältnis der grob geschroteten Produkte beim Kaffee zwischen 20 und 100% an Stücken und 0 bis 80% an Pulver liegt.

16. Verfahren nach Anspruch 14, **dadurch gekennzeichnet, dass** das Verhältnis der grob geschroteten Produkte beim Kakao zwischen 20 und 50% an Stücken und 50 bis 80% an Pulver liegt.

17. Anwendung des Verfahrens entsprechend einem der Ansprüche 14 bis 16 zum Herstellen von Kakao- oder Kaffeeschnaps.
